# EUROPÄISCHE PATENTANMELDUNG

(11) **EP 1 967 401 A2**
(43) Veröffentlichungstag der Anmeldung: **10.09.2008**
(21) Anmeldenummer: 08003244.4
(22) Anmeldetag: 22.02.2008
(51) Int. Cl.: B60J 1/20

(54) **Automatisch betätigbares Seitenfensterrollo**

(30) Priorität: 09.03.2007 DE 102007012281
(71) Anmelder: BOS GmbH & Co. KG, 73760 Ostfildern (DE)
(72) Erfinder: Starzmann, Bernd, 73666 Hohengehren (DE); Maier, Matthias, 73733 Esslingen (DE); Hansen, Melf, 75053 Gondelsheim (DE); Walter, Herbert, 73061 Ebersbach (DE)
(74) Vertreter: Dauster, Katja

(57) **Zusammenfassung**

Die Erfindung betrifft ein Seitenfensterrollo für eine Fensteröffnung (23) eines Kraftfahrzeugs umfassend eine Wickelwelle (43), eine Rollobahn (40), welche mit einer ersten Kante an der Wickelwelle (43) befestigt ist, ein Auszugsprofil (41), welches mit einer der ersten Kante gegenüberliegenden, zweiten Kante der Rollobahn (40) wirkverbunden ist, so dass mittels des Auszugsprofils (41) die Rollobahn (40) von der Wickelwelle (43) abziehbar ist, eine Betätigungsvorrichtung (51, 105, 205) und einen Antrieb (6, 61, 261, 406) zum Antreiben der Betätigungsvorrichtung (51, 105, 205), wobei mittels der Betätigungsvorrichtung (51, 105, 205, 351) das Auszugsprofil (41) verschiebbar ist und der Antrieb (6, 61, 261, 406) zumindest teilweise im Bereich der Wickelwelle (43) angeordnet ist.

Die Erfindung betrifft weiter ein Verfahren zur Anbringung eines Seitenfensterrollos (4, 104, 204, 304, 404) an einer Seitentür (2) eines Kraftfahrzeugs.

## Beschreibung

Die Erfindung betrifft ein Seitenfensterrollo für ein Kraftfahrzeug umfassend eine Wickelwelle, eine Rollobahn, welche mit einer ersten Kante an der Wickelwelle befestigt ist, ein Auszugsprofil, welches mit einer der ersten Kante gegenüberliegenden, zweiten Kante der Rollobahn wirkverbunden ist, so dass mittels des Auszugsprofils die Rollobahn von der Wickelwelle abziehbar ist, eine Betätigungsvorrichtung, wobei mittels der Betätigungsvorrichtung das Auszugsprofil verschiebbar ist, und einen Antrieb zum Antreiben der Betätigungsvorrichtung. Die Erfindung betrifft weiter ein Verfahren zur Anbringung eines Seitenfensterrollos an einer Seitentür eines Kraftfahrzeugs.

Ein Seitenfensterrollo ist beispielsweise aus der EP 1 123 824 A2 bekannt, wobei das Seitenfensterrollo an einer Seitentür eines Kraftfahrzeugs angeordnet ist und elektrisch fernbedient aus- und/oder eingefahren werden kann. Im eingefahrenen Zustand verschwindet das Seitenfensterrollo weitgehend innerhalb einer Seitentür bzw. hinter einer Türverkleidung der Seitentür. Das Seitenfensterrollo umfasst ein Auszugsprofil, über welches die Rollobahn von der Wickelwelle abwickelbar ist.

Das Auszugsprofil ist beispielsweise über eine Betätigungsvorrichtung umfassend einen angetriebenen Galgen bewegbar. Zum Antreiben des Galgens ist ein Getriebemotor vorgesehen, welcher in einem unteren Bereich einer Seitentüre angeordnet ist. Mittels des Getriebemotors ist das Seitenfensterrollo ferngesteuert, beispielsweise durch einen Fahrer und/oder einen Fahrgast im Fond des Fahrzeugs, betätigbar.

Der Erfindung liegt die Aufgabe zugrunde, ein automatisch betätigbares Seitenfensterrollo zu schaffen, welches einen guten Antrieb einer Betätigungsvorrichtung ermöglicht. Es ist weiter Aufgabe der Erfindung, ein Verfahren zum Anbringen eines Seitenfensterrollos an einer Seitentür eines Kraftfahrzeugs zu schaffen.

Diese Aufgabe wird gelöst durch ein Seitenfensterrollo für ein Kraftfahrzeug umfassend eine Wickelwelle, eine Rollobahn, welche mit einer ersten Kante an der Wickelwelle befestigt ist, ein Auszugsprofil, welches mit einer der ersten Kante gegenüberliegenden zweiten Kante der Rollobahn wirkverbunden ist, so dass mittels des Auszugsprofils die Rollobahn von der Wickelwelle abziehbar ist, eine Betätigungsvorrichtung und einen Antrieb zum Antreiben der Betätigungsvorrichtung, wobei mittels der Betätigungsvorrichtung das Auszugsprofil verschiebbar ist und der Antrieb für die Betätigungsvorrichtung im Bereich der Wickelwelle angeordnet ist. Durch die Anordnung des Antriebs im Bereich der Wickelwelle ist es möglich, die Betätigungsvorrichtung kleinbauend zu gestalten. Außerdem können weite Kraftübertragungswege verhindert werden, da der Antrieb für die Betätigungsvorrichtung im Wesentlichen in deren Wirkungsbereich angeordnet ist. Ein weiterer Vorteil der Erfindung ist, dass für den Antrieb und/oder die Betätigungsmittel nur ein geringer Platzbedarf innerhalb der Seitentür besteht, so dass weitere Bauteile, wie ein elektrisch betätigbares Seitenfenster, Lautsprecher oder dergleichen, in der Seitentür problemlos integrierbar sind. Durch die Erfindung ist eine besonders kompakte Bauweise erzielbar. Die Betätigungsvorrichtung kann als vormontierte Baueinheit angeliefert werden. Hierdurch ist eine erleichterte Handhabung bei Montage oder Demontage erzielbar. Gegenüber dem Stand der Technik sind keine herabhängenden Wellen vorhanden.

Ein Antrieb erfolgt beispielsweise durch einen Federmotor, pneumatisch, hydraulisch und/oder über einen Elektromotor, wobei durch den Antrieb mittels geeigneter Betätigungsmittel das Auszugsprofil zumindest zum Abziehen der Rollobahn bewegbar ist. Als Federmotor wird dabei eine Einrichtung bezeichnet, wobei eine Feder oder dergleichen als mechanischer Energiespeicher dient. Ein Aufrollen der Rollobahn ist beispielsweise über einen an der Wickelwelle integrierten Federmotor möglich. In anderen Ausgestaltungen wird ein Aufwickeln durch den Antrieb oder einen weiteren, mit der Wickelwelle wirkverbundene Antrieb unterstützbar ist.

In einer Ausgestaltung der Erfindung ist der Antrieb an einer Seitentür direkt unterhalb eines unteren Rands des Seitenfensters anordenbar. Durch eine Anbringung direkt unterhalb des unteren Rands des Seitenfensters ist eine gute Raumausnutzung möglich. Die Wickelwelle ist in einer Ausgestaltung in einer Kassette angeordnet. Der Antrieb kann dabei ebenfalls an der Kassette angeordnet sein. In einer Ausführungsform ist die Wickelwelle parallel zu dem unteren Rand des Seitenfensters angeordnet.

In einer weiteren Ausgestaltung der Erfindung umfasst der Antrieb einen Elektromotor, insbesondere einen elektrischen Getriebemotor. Elektromotoren sind gut ansteuer- und/oder regelbar, so dass eine automatisierte Betätigung des Seitenfensterrollos in ein Management für im Kraftfahrzeug vorhandene Steuergeräte auf einfache Weise integrierbar ist. Beispielsweise ist es denkbar, das Seitenfensterrollo mit einer Sensorik zur Erfassung einer Sonnenstrahlung zu koppeln, wobei bei einem festlegbaren Wert das Seitenfensterrollo selbsttätig ein zugehöriges Seitenfenster verdunkelt. Durch das Getriebe werden die Drehzahl und das Drehmoment des Elektromotors in eine niedrigere Drehzahl für eine Antriebswelle übersetzt.

In einer weiteren Ausgestaltung der Erfindung umfasst die Betätigungsvorrichtung ein längserstrecktes Betätigungsmittel mit wenigstens einer Reihe von Profilierungen, insbesondere zahnförmigen Nuten und/oder Vorsprüngen, wobei der Antrieb ein Abtriebsrad zum Antreiben des Betätigungsmittels umfasst, das korrespondierend formschlüssig in die Profilierungen des Betätigungsmittels eingreifende Gegenprofilierungen, insbesondere Zähne, aufweist. Als Profilierungen und Gegenprofilierungen können Zähne, Aussparungen, Vertiefungen, Nuten, Lochungen, Zapfen, Stege und ähnliches vorgesehen sein. Das Zahnrad sitzt in einer Ausgestaltung direkt auf einer Antriebswelle des Getriebemotors. Durch die erfindungsgemäße Anordnung des Antriebs ist ein direkter Antrieb des Betätigungsmittels im Bereich der Wickelwelle möglich.

In einer weiteren Ausgestaltung der Erfindung umfasst die Betätigungsvorrichtung mindestens eine Zahnstange, die mit dem Auszugsprofil für eine Bewegungsübertragung wirkverbunden ist. Dadurch, dass der Antrieb direkt im Bereich der Wickelwelle angeordnet ist, kann die Zahnstange direkt im Bereich der Wickelwelle angetrieben werden. Dies erlaubt eine gute, verlustfreie Krafteinbringung. Außerdem kann so die Zahnstange relativ kurz gestaltet sein, wobei die Länge im Wesentlichen der Auszugslänge der Rollobahn entspricht.

In einer Weiterbildung der Erfindung ist die Zahnstange biegeelastisch. Dadurch ist es möglich, die Zahnstange innerhalb der Seitentür und/oder hinter einer Türverkleidung auf geeignete Weise entlang einer gekrümmten Bahn zu führen.

In einer weiteren Ausgestaltung der Erfindung umfasst die Betätigungsvorrichtung eine Zahnschnur, die mit dem Auszugsprofil für eine Bewegungsübertragung wirkverbunden ist. Als Zahnschnur wird im Sinne der Erfindung ein flexibles Kraftübertragungsmittel bezeichnet, das im Verhältnis zu seiner Dicke sehr langgestreckt ist und durch das sowohl Zugals auch Druckkräfte übertragbar sind. Eine Zahnschnur umfasst beispielsweise eine biegeelastische Seele, welche üblicherweise zylindrisch gestaltet ist, und einen Wendel, welcher um die Seele gewunden ist, um so eine Schrägverzahnung zu bilden. Die Zahnschnur weist eine ausreichende Steifigkeit auf, um das Auszugsprofil des Seitenfensterrollos zu verschieben.

In einer anderen Ausgestaltung der Erfindung umfasst die Betätigungsvorrichtung als Betätigungsmittel ein gelochtes Längsprofil, insbesondere ein Metallblech, das mit dem Auszugsprofil für eine Bewegungsübertragung wirkverbunden ist. Das gelochte Blech weist dabei eine ausreichende Knicksteifigkeit auf, um ein Ausknicken des Blechs beim Ausfahren des Seitenfensterrollos zu verhindern. Die Knicksteifigkeit kann durch entsprechende Profilierung des Bleches noch erhöht werden. Der Antrieb umfasst dabei vorzugsweise ein Abtriebsrad zum Antreiben des Längsprofils, das korrespondierend formschlüssig in die Profilierungen des Längsprofils eingreifende Gegenprofilierungen, insbesondere Fortsätze aufweist.

In einer anderen Ausgestaltung der Erfindung ist der Antrieb als Seilantrieb und/oder Lochbandantrieb gestaltet, durch welchen mindestens eine im Wesentlichen knicksteife Stange der Betätigungsvorrichtung zum Verschieben des Auszugsprofils betätigbar ist. Die Stange ist zu diesem Zweck in einer Ausgestaltung mit dem Lochband mechanisch wirkverbunden.

In einer weiteren Ausgestaltung der Erfindung entspricht ein Zuschnitt der Rollobahn zumindest annähernd einer Form eines Seitenfensters. Dadurch ist es möglich, ein Eintreten von Sonnenstrahlen sicher zu verhindern und/oder einen guten Sichtschutz zu schaffen.

In einer weiteren Ausgestaltung ist ein Betätigungselement der Betätigungsvorrichtung, insbesondere eine Zahnstange, eine Zahnschnur, eine Stange und/oder ein Blech, zumindest teilweise in einer Führungsschiene geführt. Die Führungsschiene ist beispielsweise an der B-Säule und/oder im Bereich der B-Säule anordenbar. Das Betätigungselement greift dabei an einem Ende des Auszugsprofils an, welche als eine Art Galgen gestaltet sein kann.

In einer weiteren Ausgestaltung ist ein Betätigungselement der Betätigungsvorrichtung, insbesondere eine Zahnstange, eine Zahnschnur, eine Stange und/oder ein Blech, zumindest teilweise ohne Führungsschiene mit einer Kraft zum Abziehen der Rollobahn beaufschlagbar. Das Betätigungselement kann dabei beispielsweise mittig an dem Auszugsprofil angreifen. In einer Gestaltung des Betätigungselements weist dieses eine ausreichende Knicksteifigkeit auf, um geräuscherzeugende Schwingungen der ausgefahrenen Rollobahn zu verhindern. In einer anderen Ausführungsform der Erfindung sind weitere Stabilisierungsmittel vorgesehen, welche angetrieben oder geschleppt gestaltet sein können.

In einer Ausgestaltung der Erfindung umfasst die Betätigungsvorrichtung mehrere, synchronisiert bewegbare Betätigungselemente, wobei die Betätigungselemente durch einen gemeinsamen Antrieb und/oder durch verschiedene Antriebe angetrieben werden können.

In einer Weiterbildung ist die Bewegung der Betätigungselemente, beispielsweise der Stangen, durch eine Synchronisationswelle synchronisiert. Der Antrieb, beispielsweise ein Getriebemotor, kann dabei so angeordnet werden, dass er direkt an der Synchronisationswelle angreift, welche dann die Betätigungselemente oder Betätigungsmittel antreibt. In anderen Ausgestaltungen ist der Antriebsmotor einem der Betätigungselemente zugeordnet, wohingegen die weiteren Betätigungselemente durch die Synchronisationswelle angetrieben werden.

Die Aufgabe wird weiter gelöst durch ein Verfahren zur Anbringung eines Seitenfensterrollos, umfassend eine Wickelwelle, eine Rollobahn, welche mit einer ersten Kante an der Wickelwelle befestigt ist, ein Auszugsprofil, welche mit einer der ersten Kante gegenüberliegenden zweiten Kante der Rollobahn wirkverbunden ist, so dass mittels des Auszugsprofils die Rollobahn von der Wickelwelle abziehbar ist, eine Betätigungsvorrichtung, wobei mittels der Betätigungsvorrichtung das Auszugsprofil verschiebbar ist, und einen Antrieb zum Antreiben der Betätigungsvorrichtung, in einem Kraftfahrzeug, wobei der Antrieb an einer Seitentür des Kraftfahrzeugs im Bereich direkt unterhalb eines unteren Rands einer Fensteröffnung angebracht wird. Eine Anbringung des Seitenfensterrollos kann im Rahmen einer Vormontage der Seitentür erfolgen. Durch Anbringung des Antriebs im Bereich der Fensterbrüstung verbleibt ein Raum unterhalb des Antriebs für weitere Elemente, welche in der Seitentür zu integrieren sind.

Weitere Vorteile der Erfindung ergeben sich aus der nachfolgenden Beschreibung von Ausführungsbeispielen der Erfindung, die in den Zeichnungen schematisch dargestellt sind. Für gleiche oder ähnliche Bauteile werden in den Zeichnungen einheitliche Bezugszeichen verwendet. Sämtliche aus den Ansprüchen, der Beschreibung oder den Zeichnungen hervorgehende Merkmale und/oder Vorteile, einschließlich Verfahrensschritte, konstruktive Einzelheiten und räumliche Anordnungen, können sowohl für sich als auch in den verschiedensten Kombinationen erfindungswesentlich sein. Als Teil eines Ausführungsbeispiels beschriebene oder dargestellte Merkmale können ebenso in einem anderen Ausführungsbeispiel verwendet werden, um eine weitere Ausführungsform der Erfindung zu erhalten.

In den Zeichnungen zeigen:
- Fig. 1:: eine teilweise freigeschnittene, perspektivische Darstellung eines Fondbereichs eines Kraftfahrzeugs mit Blick auf die Innenseite der hinteren, rechten Tür;
- Fig. 2:: die hintere, rechte Tür gemäß Fig. 1 mit einem erfindungsgemäßen Seitenfensterrollo gemäß einem ersten Ausführungsbeispiel in einer teilweise freigeschnittenen Darstellung;
- Fig. 3:: die hintere, rechte Tür gemäß Fig. 1 mit einem erfindungsgemäßen Seitenfensterrollo gemäß einem zweiten Ausführungsbeispiel in einer teilweise freigeschnittenen Darstellung;
- Fig. 4:: das Seitenfensterrollo gemäß Fig. 3 in einer geschnittenen Darstellung,
- Fig. 5:: eine Variante des Seitenfensterrollos gemäß Fig. 3,
- Fig. 6:: die hintere, rechte Tür gemäß Fig. 1 mit einer Variante des Seitenfensterrollos gemäß Fig. 2;
- Fig. 7:: eine Betätigungsvorrichtung eines Seitenfensterrollos mit einem Lochbandtrieb;
- Fig. 8:: eine weitere Variante einer Betätigungsvorrichtung eines Seitenfensterrollos und
- Fig. 9:: eine schematische Darstellung einer hinteren, linken Seitentür mit einem weiteren Ausführungsbeispiel eines Seitenfensterrollos.

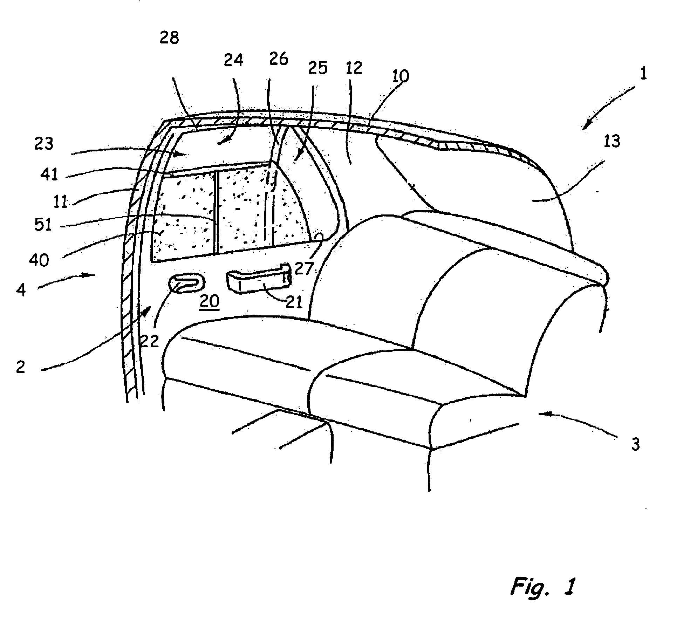

Figur 1 zeigt schematisch einen Fondbereich eines Kraftfahrzeugs 1 in einer teilweise freigeschnittenen, perspektivischen Darstellung mit Blick auf die Innenseite einer hinteren, rechten Seitentür 2. Das Kraftfahrzeug 1 weist ein Fahrzeugdach 10 auf, von dem seitlich eine B-Säule 11 des Kraftfahrzeugs 1 zu einer nicht dargestellten Bodengruppe führt. Bekanntermaßen, ist eine entsprechende B-Säule auch auf der Figur 1 nicht dargestellten linken Seite des Kraftfahrzeugs 1 vorgesehen. Das Kraftfahrzeug 1 weist weiter eine C-Säule 12 auf. Das Dach 10 geht an einer Hinterkante in eine Heckfensteröffnung 13 über, in welche eine nicht dargestellte Heckscheibe eingesetzt werden kann. Zwischen der B-Säule 11 und der C-Säule 12 ist die rechte, hintere Seitentür 2 auf bekannte Weise angebracht, insbesondere anscharniert. Auf Höhe der Seitentür 2 befindet sich eine Rücksitzbank 3.

Die in Fig. 1 sichtbare, einem Innenraum des Kraftfahrzeugs 1 zugewandte Innenseite der Seitentür 2 weist eine Innenverkleidung 20 auf. An der Innenverkleidung 20 sind ein Türgriff 21 und eine Betätigungsklinke 22 für ein nicht dargestelltes Türschloss vorgesehen. Weitere, nicht dargestellte Elemente, wie Lautsprecher und dergleichen, können ebenfalls in die Seitentür 2 integriert sein.

Die Seitentür 2 weist eine Fensteröffnung 23 auf, welche in einen ersten Abschnitt 24 und einen zweiten Abschnitt 25 durch einen Steg 26 unterteilt ist. Der zweite Abschnitt 25 ist dabei als sogenanntes Dreiecksfenster gestaltet, so dass die Fensteröffnung 23 im Wesentlichen trapezförmig ist. Die Fensteröffnung 23 weist einen unteren Rand 27 und einen oberen Rand 28 auf, wobei der obere Rand 28 üblicherweise nicht parallel zu dem unteren Rand 27 verläuft, sondern gekrümmt verlaufen kann.

In die Fensteröffnung 23 ist ein nicht dargestelltes, zweiteiliges Seitenfenster einsetzbar. Das Seitenfenster ist üblicherweise zumindest in dem ersten Abschnitt 24 verschieblich.

Die Fensteröffnung 23 ist weiter durch ein erfindungsgemäßes Seitenfensterrollo 4 mit einer Rollobahn 40 verdunkelbar. Das erfindungsgemäße Seitenfensterrollo 4 umfasst ein Auszugsprofil 41, durch welches die Rollobahn 40 von einer in Figur 1 nicht dargestellten Wickelwelle abwickelbar ist. Das Auszugsprofil 41 ist mittels einer Betätigungsvorrichtung bewegbar. In dem in Fig. 1 dargestellten Ausführungsbeispiel umfasst die Betätigungsvorrichtung eine Zahnstange 51.

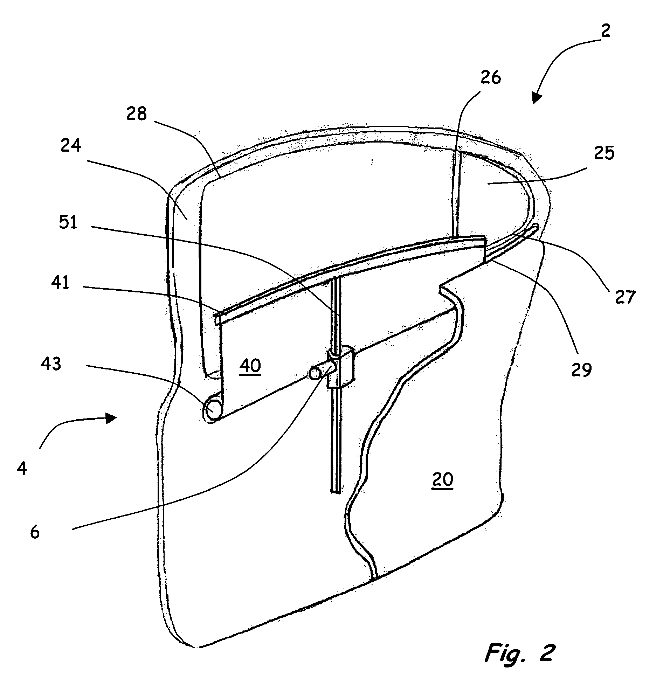

Fig. 2 zeigt schematisch die Seitentür 2 gemäß Fig. 1. Für gleiche Bauteile werden einheitliche Bezugszeichen verwendet und auf eine detaillierte Beschreibung dieser Bauteile wird verzichtet. In der Darstellung gemäß Fig. 2 ist die Innenverkleidung 20 der Seitentür 2 teilweise freigeschnitten. Dadurch sind im normalen Gebrauch nicht sichtbare Teile des Seitenfensterrollos 4 sichtbar. Wie in Fig. 2 erkennbar, umfasst das Seitenfensterrollo 4 eine Wickelwelle 43, an welcher die Rollobahn 40 auf- und abwickelbar befestigt ist. In der Darstellung gemäß Fig. 2 ist die Rollobahn 40 nur teilweise abgewickelt. Wie in Figur 2 erkennbar, ist die Rollobahn 40 beim Aufwickeln auf die Wickelwelle 43 über einen Schlitz 29 hinter der Innenverkleidung 20 der Seitentür 2 versenkbar. Die Rollobahn 40 ist dabei in einer vorteilhaften Ausgestaltung vollständig hinter der Innenverkleidung 20 versenkbar. Wie in Fig. 2 erkennbar, ist das dargestellte Auszugsprofil 41 zumindest abschnittsweise gekrümmt, so dass das Auszugsprofil 41 an den Verlauf eines oberen Rands 28 der abzudeckenden Fensteröffnung 23 anpassbar ist. Dadurch ist eine gute Abdunkelung des zugehörigen Seitenfensters möglich.

Das Auszugsprofil 41 ist mit der Zahnstange 51 zum Verschieben des Auszugsprofils und somit zum Abziehen der Rollobahn 40 von der Wickelwelle 43 wirkverbunden. Im Bereich des unteren Rands 28 der Fensteröffnung 23 ist ein in Fig. 2 sichtbarer Getriebemotor 6 angeordnet, welcher ein nicht sichtbares Zahnrad zum Antreiben der Zahnstange 51 aufweist. Eine Länge der Zahnstange 51 entspricht im Wesentlichen einer Auszugslänge der Rollobahn 40. Die Zahnstange 51 benötigt nur wenig Platz an der Seitentür 2 und kann so einfach in diese integriert werden. Dadurch dass der Antriebsmotor 6 direkt an dem unteren Rand 28 angeordnet ist, ist eine gute Krafteinbringung möglich. Zudem wird eine ausgefahrene Länge der Zahnstange 51 minimiert, so dass eine Gefahr eines Ausknickens beim Ausfahren reduziert wird. Anstelle einer Zahnstange 51 ist in anderen, nicht dargestellten Ausführungsformen der Erfindung ein gelochtes Blech und/oder ein anderes Betätigungselement vorgesehen, welches zahnförmige Nuten und/oder Vorsprünge für einen Antrieb mittels eines Zahnrads aufweist. In anderen Ausgestaltungen ist eine pneumatisch antreibbare Stange zum Bewegen des Auszugsprofils vorgesehen.

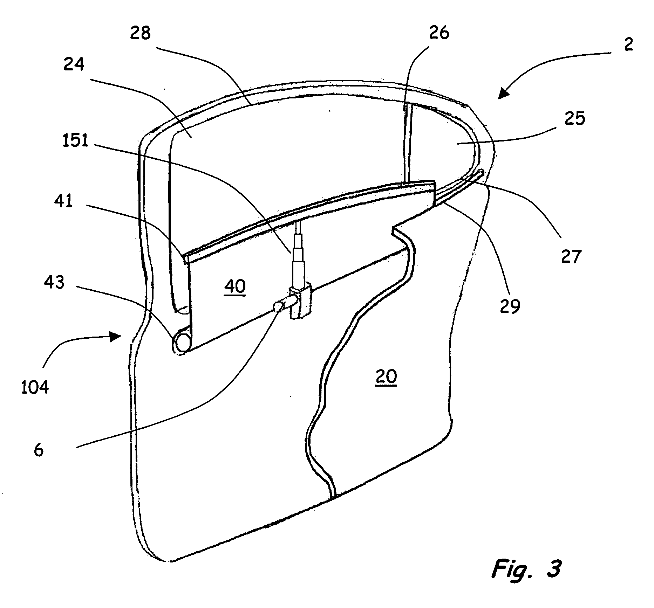

Fig. 3 zeigt schematisch die Seitentür 2 gemäß Fig. 1 mit einem Seitenfensterrollo 104 gemäß einem zweiten Ausführungsbeispiel der Erfindung. Das Seitenfensterrollo 104 ist ähnlich dem Seitenfensterrollo gemäß Fig. 2 und für gleiche Bauteile werden einheitliche Bezugszeichen verwendet. Auf eine detaillierte Beschreibung dieser Bauteile wird verzichtet. Eine Betätigungsvorrichtung für das Seitenfensterrollo 104 umfasst einen Teleskopstab 151, der an dem Auszugsprofil 41 angreift, so dass das Auszugsprofil 41 in der dargestellten Ausführungsform in Richtung des oberen Rands 28 der Fensteröffnung 23 zum Abwickeln der Rollobahn 40 bewegbar ist. Der dargestellte Teleskopstab 151 wird durch eine in Fig. 3 nicht sichtbare Zahnschnur bewegt. Der Antrieb der Zahnschnur erfolgt mittels eines Antriebsmittels, vorzugsweise mittels des schematisch dargestellten, elektrischen Getriebemotors 6. Wie in Fig. 3 erkennbar, ist die erfindungsgemäße Betätigungsvorrichtung für das Seitenfensterrollo 104 kompakt baubar und so in der Nähe des unteren Rands 27 der Fensteröffnung anbringbar.

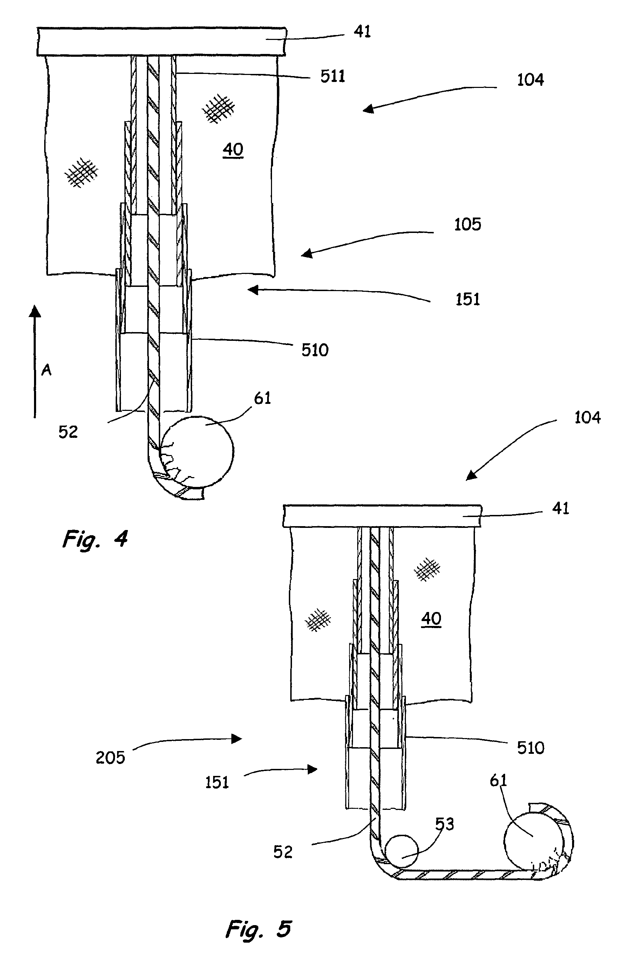

Fig. 4 zeigt schematisch eine Betätigungsvorrichtung 105 für das Seitenfensterrollo 104 gemäß Fig. 3 in einer geschnittenen Ansicht. Wie in Fig. 4 erkennbar, weist der Teleskopstab 151 mehrere rohrförmige Teleskopelemente oder Glieder 510, 511 auf, welche ineinander verschiebbar miteinander verbunden sind. In der Ausführungsform gemäß Fig. 4 ist das Teleskopelement 511 mit dem geringsten Durchmesser dem Auszugsprofil 41 zugeordnet und mit diesem verbunden. Selbstverständlich ist es auch denkbar, den Teleskopstab 151 in umgekehrter Ausrichtung anzuordnen. Wie in Fig. 4 erkennbar, ist in dem Teleskopstab 151 eine Zahnschnur 52 angeordnet. Die Zahnschnur 52 ist in dem dargestellten Ausführungsbeispiel konzentrisch zu dem Teleskopstab 151 angeordnet. Die Zahnschnur 52 ist weiter an dem Teleskopelement 511, welches dem Auszugsprofil 41 zugeordnet ist, mit dem Teleskopstab 151 verbunden, sodass eine Bewegung der Zahnschnur 52 in eine Auszugrichtung A auf den Teleskopstab 151 übertragbar ist. Die Zahnschnur 52 wird durch einen Antrieb umfassend ein Zahnrad 61 angetrieben, wobei in dem dargestellten Ausführungsbeispiel die Zahnschnur 52 bei einer Drehung des Zahnrads 61 im Uhrzeigersinn in die in der Auszugrichtung A verschoben wird, sodass die Rollobahn 40 ausgefahren wird. Das dargestellte Zahnrad 61 ist mit einer Wickelwelle ausgeformt, auf welche die Zahnschnur 52 aufwickelbar ist. Das Zahnrad 61 wird durch einen nicht dargestellten Elektromotor angetrieben, wobei ein nicht dargestelltes Getriebe vorgesehen sein kann, um eine Drehzahl und ein Drehmoment des Elektromotors in eine für das Zahnrad 61 geeignete Drehzahl und ein gewünschtes Drehmoment zu übersetzen.

Fig. 5 zeigt schematisch eine Betätigungsvorrichtung für ein Seitenfensterrollo 104 mit einer Betätigungsvorrichtung 205 gemäß einer Variante des Ausführungsbeispiels gemäß Fig. 4. Die Betätigungsvorrichtung 205 entspricht im Wesentlichen der Betätigungsvorrichtung 105 gemäß Figur 4 und für gleiche Bauteile werden einheitliche Bezugszeichen verwendet. Auf eine Beschreibung dieser Bauteile wird verzichtet. Die Betätigungsvorrichtung 205 gemäß Figur 4 umfasst zusätzlich eine Umlenkrolle 53, durch welche die Zahnschnur 52 umgelenkt wird. Dadurch ist es möglich, das Zahnrad 61 und einen nicht dargestellten Antrieb an eine geeignete Position an der in Figur 3 dargestellten Seitentür 2 anzuordnen, um so bauliche Beschränkungen in einer Seitentür 2 zu berücksichtigen.

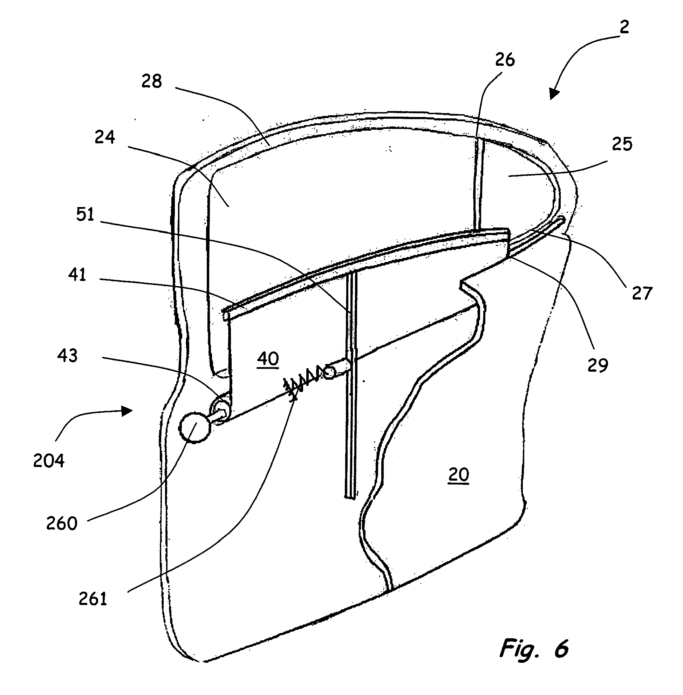

Fig. 6 zeigt schematisch die Seitentür 2 gemäß Fig. 1 mit einem weiteren Seitenfensterrollo 204. Das Seitenfensterrollo 204 ist eine Variante des Seitenfensterrollos 4 gemäß Fig. 2 und für gleiche oder ähnliche Bauteile werden einheitliche Bezugszeichen verwendet. Auf eine detaillierte Beschreibung dieser Bauteile wird verzichtet. Wie in Fig. 6 erkennbar, ist an der Wickelwelle 43 des Seitenfensterrollos 204 ein Getriebemotor 260 angeordnet. Daneben ist im Bereich der Wickelwelle 43 ein Federmotor 261 angeordnet, welcher die Zahnstange 51 antreibt. Das Auszugsprofil 41 ist wie bei der Ausführungsform gemäß Fig. 2 mit der Zahnstange 51 zum Verschieben des Auszugsprofils 41 und somit zum Abziehen der Rollobahn 40 von der Wickelwelle 43 wirkverbunden. Ein Abwickeln erfolgt in dem dargestellten Ausführungsbeispiel aufgrund der Kraft des Federmotors 261. Der Federmotor 261 kann beispielsweise ein Federblech umfassen. Zum Aufwickeln der Rollobahn 40 auf die Wickelwelle 43 wird diese durch den Getriebemotor 260 angetrieben. Ein Aufwickeln erfolgt dabei entgegen der Kraft des Federmotors 261, so dass eine Spannung der Rollobahn 40 beim Aufwickeln erzielt wird.

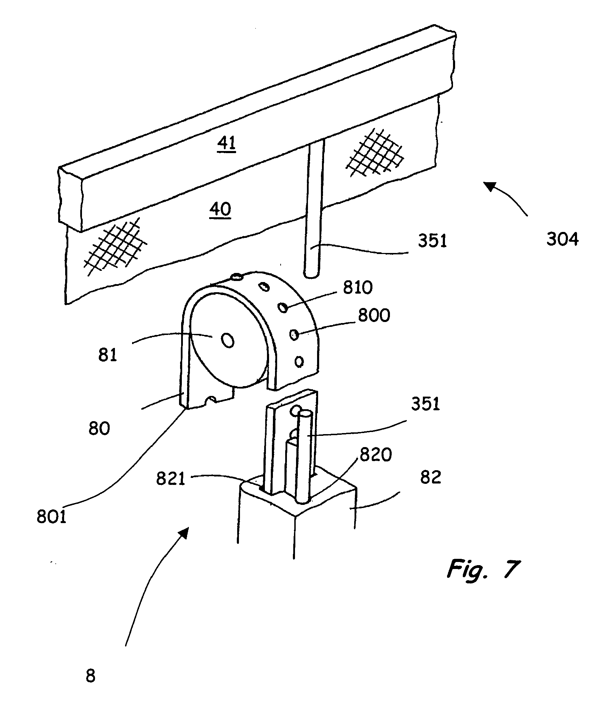

Fig. 7 zeigt schematisch einen Lochbandtrieb 8 eines Seitenfensterrollos 304 gemäß einem weiteren Ausführungsbeispiel der Erfindung. Das Seitenfensterrollo 304 umfasst eine Rollobahn 40, welcher auf einer nicht dargestellten Wickelwelle auf- und abwickelbar angeordnet ist. Das freie Ende der Rollobahn 40 ist mit einem Auszugsprofil 41 verbunden. Ein Verschieben des Auszugsprofils 41 erfolgt mittels einer im Wesentlichen knicksteifen Stange 351, welche auch als Antenne bezeichnet wird. Die Stange 351 ist in dem dargestellten Ausführungsbeispiel nicht geführt. Es ist jedoch auch denkbar, die Stange 351 beispielsweise in einer Seitenführung zu führen. Die Stange 351 ist mit einem Lochband 80 für eine Bewegungsübertragung mechanisch wirkverbunden. Das Lochband 80 ist beispielsweise als Federstahlband oder dergleichen ausgebildet. Daneben ist es jedoch auch denkbar, das Lochband aus Leder oder dergleichen auszubilden. Das Lochband 80 weist Löcher 800 auf, welche in einem festen Abstand zueinander in Längsrichtung angeordnet sind. Der Lochbandtrieb umfasst weiter eine Scheibe 81, welches über einen in Fig. 7 nicht dargestellten Antrieb antreibbar ist. Die Scheibe 81 weist Fortsätze 810 auf, welche in die Löcher 800 des Lochbands 80 greifen, so dass die Drehbewegung der Scheibe 81 auf das Lochband 80 übertragen wird. Das freie Ende 801 des Lochbands 80 kann auf eine in Fig. 7 nicht dargestellte Rolle oder dergleichen aufgewickelt werden. Dabei ist es auch denkbar, eine nicht dargestellte Rolle zum Aufwickeln des freien Endes 801 des Lochbands 80 anzutreiben, wobei anstelle der direkt angetriebenen Scheibe 81 eine nicht direkt angetriebene Scheibe vorgesehen werden kann, welche aufgrund einer Wickelbewegung des Lochbands 80 geschleppt wird. Bei einer Bewegung zum Einfahren der Rollobahn 40 wird in dem dargestellten Ausführungsbeispiel die Stange 351 mit dem daran befestigten Lochband 80 in einer Aufnahme 82 versenkt, welche zu diesem Zweck geeignete Nuten 820, 821 aufweist. Anstelle des Lochbands 80 ist in einer anderen Ausgestaltung ein Seil vorgesehen, welches in einem Ausführungsbeispiel als Zahnschnur 52 gemäß Fig. 4 gestaltet ist.

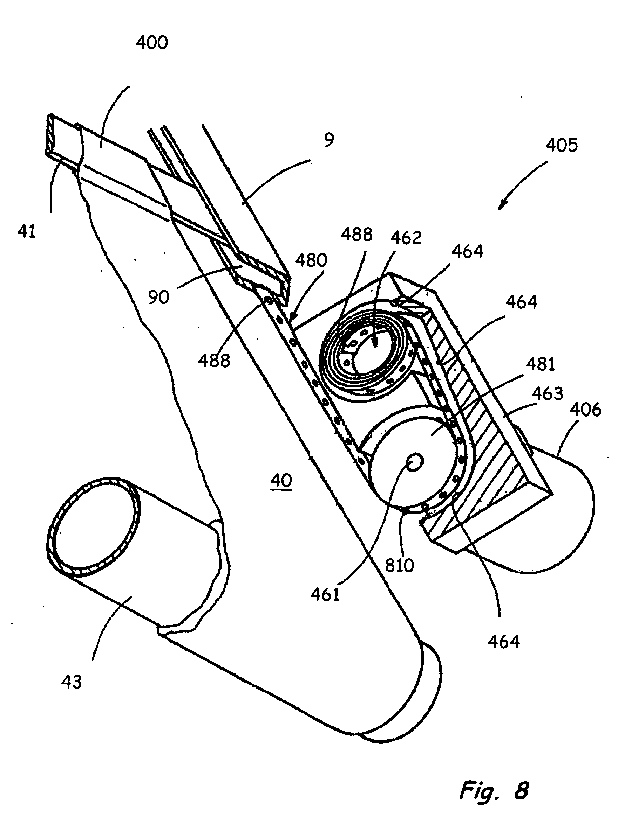

Fig. 8 zeigt eine weitere Ausgestaltung einer Betätigungsvorrichtung 405 eines Seitenfensterrollos umfassend ein Lochband 480. Das Lochband 480 ist direkt mit einem Auszugsprofil 41 zum Abwickeln einer Rollobahn 40 von der Wickelwelle 43 wirkverbunden. Das Lochband 480 kann für diesen Zweck eine geeignete Knicksteifigkeit aufweisen und/oder wie dargestellt in Führungsschienen 9 mit Nuten 90 geführt werden.
Die Rollobahn 40 weist in der dargestellten Ausführungsform eine Schlaufe 400 zur Anbindung an das Auszugsprofil 41 auf, in welche das Auszugsprofil einschiebbar ist. Ein Antrieb des Lochbands 480 erfolgt über eine Scheibe 481 mit stiftartigen Fortsätzen 810, welche radial von der Scheibe 481 abragen. Die stiftartigen Fortsätze 810 greifen in korrespondierende Löcher 488 des Lochbands 480. Ein Antrieb der Scheibe 481 erfolgt in dem dargestellten Ausführungsbeispiele über eine Antriebswelle 461, welche von einem Getriebemotor 406 angetrieben wird. Über die Antriebswelle 461 können weitere, nicht dargestellte Scheiben 481 oder andere Betätigungselemente angetrieben werden. Ein freies Ende des Lochbands 480 wird auf einer Rolle 462 aufgewickelt. Die Scheibe 461 und die Rolle 462 sind in einem Gehäuse 463 gelagert, welches hierfür entsprechende Aufnahmen 464 aufweist.

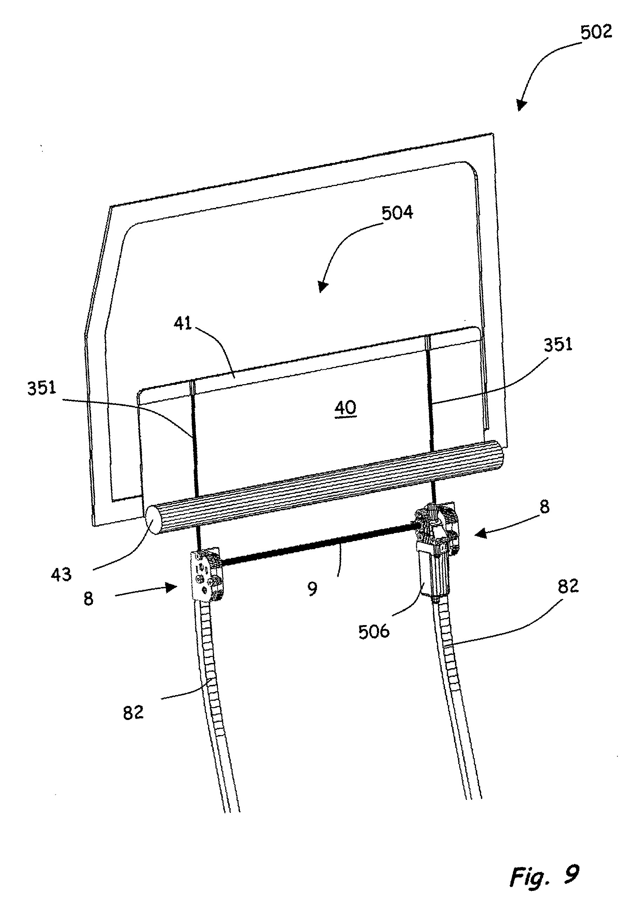

Fig. 9 zeigt schematisch eine hintere linke Seitentür 502 mit einem Seitenfensterrollo 504 gemäß einem weiteren Ausführungsbeispiel der Erfindung. Das Seitenfensterrollo 504 weist eine Rollobahn 40 auf, welche auf einer Wickelwelle 43 auf- und abwickelbar angeordnet ist. An dem freien Ende der Rollobahn 40 ist ein Auszugsprofil 41 vorgesehen. Ein Verschieben des Auszugsprofils 41 erfolgt in dem dargestellten Ausführungsbeispiel durch zwei knicksteife Stangen 351 gemäß Fig. 7. In dem dargestellten Ausführungsbeispiel ist die Rollobahn 40 vom Innenraum betrachtet vor den Stangen 351 angeordnet. In anderen Ausgestaltungen ist der Drehsinn der Wickelwelle umgekehrt, wie in den Fig. 2, 3 und 6 dargestellt, die Stangen 351 sind dabei vor der Rollobahn 40 angeordnet.

Die Stangen 351 werden jeweils über einen Lochbandtrieb 8 gemäß Fig. 7 angetrieben. Dabei ist jedoch nur ein Getriebemotor 506 zum direkten Antrieb des in Fig. 9 rechts dargestellten Lochbandtriebs 8 vorgesehen. Der zweite, in Fig. 8 links dargestellte Lochbandtrieb 8 wird ebenfalls durch den Getriebemotor 506 angetrieben, wobei eine Bewegungsübertragung mittels einer Synchronisationswelle 7 erfolgt. Selbstverständlich ist es ebenso denkbar, den Antriebsmotor 406 an dem in Fig. 8 links dargestellten Lochbandtrieb 8 oder an der Synchronisationswelle 7 zwischen den Lochbandtrieben 8 anzuordnen. Dadurch ist eine bauraumoptimierte Anordnung möglich. Gleichzeitig wird durch die zweite Stange 351 eine Bewegung des Seitenfensterrollos 504 stabilisiert. Die Stangen 351 werden beim Aufwickeln der Rollobahn 40 auf die Wickelwelle 43 in den hierfür vorgesehenen Aufnahmeschienen 82 versenkt.

In anderen, nicht dargestellten Varianten des Seitenfensterrollos 504 gemäß Fig. 9 ist anstelle eines Lochbandtriebs 8 ein Antrieb mittels Zahnstangen 51 gemäß Fig. 2, mittel einer Zahnschnur 52 gemäß Fig. 4 oder 5 und/oder mittels eines Lochbands 480 gemäß Fig. 8 vorgesehen. Die Betätigungsmittel, wie beispielsweise die Stangen 351, Zahnstangen 51 gemäß Fig. 2, Zahnschnüre 52 gemäß Fig. 4 und 5 oder Lochbänder 480 gemäß Fig. 8, können weiter in Führungsschienen oder dergleichen geführt werden.

## Patentansprüche

1. Seitenfensterrollo für eine Fensteröffnung eines Kraftfahrzeugs umfassend eine Wickelwelle (43), eine Rollobahn (40), welche mit einer ersten Kante an der Wickelwelle (43) befestigt ist, ein Auszugsprofil (41), welches mit einer der ersten Kante gegenüberliegenden, zweiten Kante der Rollobahn (40) wirkverbunden ist, so dass mittels des Auszugsprofils (41) die Rollobahn (40) von der Wickelwelle (43) abziehbar ist, eine Betätigungsvorrichtung (51, 105, 205, 405, 351), wobei mittels der Betätigungsvorrichtung (51, 105, 205, 405, 351) das Auszugsprofil (41) verschiebbar ist, und einen Antrieb (6, 61, 261) zum Antreiben der Betätigungsvorrichtung (51, 105, 205, 405, 351), **dadurch gekennzeichnet, dass** der Antrieb (6, 61, 261, 406, 506) zumindest teilweise im Bereich der Wickelwelle (43) angeordnet ist.

2. Seitenfensterrollo nach Anspruch 1, **dadurch gekennzeichnet, dass** der Antrieb (6, 61, 261, 406, 506) an einer Seitentür (2) direkt unterhalb eines unteren Rands (28) einer Fensteröffnung (23) anordenbar ist.

3. Seitenfensterrollo nach Anspruch 1 oder 2, **dadurch gekennzeichnet, dass** der Antrieb einen Elektromotor, insbesondere einen elektrischen Getriebemotor (6, 406, 506) umfasst.

4. Seitenfensterrollo nach einem der Ansprüche 1 bis 3, **dadurch gekennzeichnet, dass** die Betätigungsvorrichtung mindestens ein längserstrecktes Betätigungsmittel (51, 52) mit wenigstens einer Reihe von Profilierungen, insbesondere zahnförmige Nuten und/oder Vorsprünge, aufweist, wobei der Antrieb ein Abtriebsrad (61) zum Antreiben des Betätigungsmittels (51, 52) umfasst, das korrespondierend formschlüssig in die Profilierungen des Betätigungsmittels eingreifende Gegenprofilierungen, insbesondere Zähne, aufweist.

5. Seitenfensterrollo nach Anspruch 4, **dadurch gekennzeichnet, dass** die Betätigungsvorrichtung als Betätigungsmittel mindestens eine Zahnstange (51) umfasst, die mit dem Auszugsprofil (41) für eine Bewegungsübertragung wirkverbunden ist.

6. Seitenfensterrollo nach Anspruch 5, **dadurch gekennzeichnet, dass** die Zahnstange (51) biegeelastisch ist.

7. Seitenfensterrollo nach Anspruch 4, **dadurch gekennzeichnet, dass** die Betätigungsvorrichtung (105, 205) als Betätigungsmittel mindestens eine Zahnschnur (52) umfasst, die mit dem Auszugsprofil (41) für eine Bewegungsübertragung wirkverbunden ist.

8. Seitenfensterrollo nach einem der Ansprüche 1 bis 4, **dadurch gekennzeichnet, dass** die Betätigungsvorrichtung als Betätigungsmittel mindestens ein gelochtes Längsprofil (80, 480), insbesondere ein Metallblech, vorzugsweise ein Federstahlband umfasst, das mit dem Auszugsprofil (41) für eine Bewegungsübertragung wirkverbunden ist.

9. Seitenfensterrollo nach Anspruch 8, **dadurch gekennzeichnet, dass** die Betätigungsvorrichtung einen Seiltrieb und/oder Lochbandtrieb (8) umfasst, durch welchen mindestens eine im Wesentlichen knicksteife Stange (351) der Betätigungsvorrichtung zum Verschieben des Auszugsprofils (41) betätigbar ist.

10. Seitenfensterrollo nach einem der Ansprüche 1 bis 9, **dadurch gekennzeichnet, dass** ein Zuschnitt der Rollobahn (40) zumindest annähernd einer Form einer Fensteröffnung (23) entspricht.

11. Seitenfensterrollo nach einem der Ansprüche 1 bis 10, **dadurch gekennzeichnet, dass** das Betätigungsmittel der Betätigungsvorrichtung, insbesondere eine Zahnstange (51), eine Zahnschnur (52), eine Stange (351) und/oder ein gelochtes Längsprofil (480), zumindest teilweise in einer Führungsschiene geführt ist.

12. Seitenfensterrollo nach einem der Ansprüche 1 bis 10, **dadurch gekennzeichnet, dass** das Betätigungsmittel der Betätigungsvorrichtung, insbesondere eine Zahnstange (51), eine Zahnschnur (52), eine Stange (351) und/oder ein Blech, zumindest teilweise ohne Führungsschiene mit einer Kraft zum Abziehen der Rollobahn (40) beaufschlagbar ist.

13. Seitenfensterrollo nach einem der Ansprüche 1 bis 12, **dadurch gekennzeichnet, dass** die Betätigungsvorrichtung mindestens zwei Betätigungsmittel (51, 52, 351, 480, 8) zum Verschieben des Auszugsprofils (41) aufweist, wobei eine Bewegung der Betätigungsmittel (51, 52, 351, 480) synchronisiert ist.

14. Seitenfensterrollo nach Anspruch 13, **dadurch gekennzeichnet, dass** eine Synchronisation der Betätigungsmittel (51, 52, 351, 480, 8) mittels einer im Wesentlichen parallel zur Wickelwelle angeordneten Synchronisationswelle (7) erfolgt.

15. Verfahren zur Anbringung eines Seitenfensterrollos in einem Kraftfahrzeug, wobei das Seitenfensterrollo (4, 104, 204, 304, 404, 504) eine Wickelwelle (43), eine Rollobahn (40), welche mit einer ersten Kante an der Wickelwelle (43) befestigt ist, ein Auszugsprofil (41), welche mit einer der ersten Kante gegenüberliegenden zweiten Kante der Rollobahn (40) wirkverbunden ist, so dass mittels des Auszugsprofils (41) die Rollobahn (40) von der Wickelwelle (43) abziehbar ist, eine Betätigungsvorrichtung (51, 105, 205, 405), mittels welcher das Auszugsprofil (41) verschiebbar ist, und einen Antrieb (6, 61, 261, 406, 506) zum Antreiben der Betätigungsvorrichtung umfasst, **dadurch gekennzeichnet, dass** der Antrieb (6, 61, 261, 406, 506) an einer Seitentür (2) des Kraftfahrzeugs im Bereich direkt unterhalb eines unteren Rands (27) einer Fensteröffnung (23) angebracht wird.
